# EUROPEAN PATENT APPLICATION

(11) **EP 4 523 842 A1**
(43) Date of publication of application: **19.03.2025**
(21) Application number: 24195923.8
(22) Date of filing: 22.08.2024
(51) Int. Cl.: B23Q 1/00, A47B 21/00, B25J 13/06, B29C 45/17, H02B 1/01, H02B 1/015, H02B 1/26

(54) **CONTROL DESK FOR A MACHINE TOOL**

(30) Priority: 15.09.2023 IT 202300018975
(71) Applicant: SCM Group S.p.A., 47921 Rimini (RN) (IT)
(72) Inventor: BERTUCCIOLI, Alessandro, 47921 Rimini (IT); RANDI, Massimo, 47921 Rimini (IT)
(74) Representative: Gallo, Gianluca

(57) **Abstract**

This invention relates to a control desk for a machine tool comprising a main frame (2); a screen (3) coupled to the main frame (2); a support (6) coupled to the main frame (2) and configured to support an accessory (7); and a container (8) coupled to the main frame (2) and configured to contain an electronic device, where the container (8) comprises a secondary frame (81) coupled to the main frame (2); and a box (82) configured to contain the electronic device and coupled rotatably to the secondary frame (81) so as to be movable between an operating position and a non-operating position.

## Description

This invention relates to a control desk for a machine tool.

More precisely, this invention relates to a control desk for a machine for machining wood or comparable materials, such as, for example, wood byproducts, aluminium, plastic and composites.

In the context of machine tools designed to perform machine processes, such as, for example, machining by stock removal or continuous cycle production of objects, machine operators need to be able to program, configure and/or control the machine tools. Therefore, machine tools are provided with a control desk, also known as "control panel" or "operator position".

Known in the prior art are control desks comprising a control unit such as, for example, an industrial PC. The control unit is configured to receive instructions and data from an operator and, based on the instructions and data received, to control the machine tool through further electronic and electromechanical components such as, for example, CNCs, drives, control cards and sensors, in order to perform the required machine process on the part to be machined.

Prior art control desks also comprise a screen for displaying and showing the operator information relating, for example, to the instructions and data entered, machine programs to be run, machine tool state, tools fitted and the progress of the machining process.

Furthermore, prior art control desks are provided with a pushbutton panel, where the pushbuttons are typically disposed in a row under the screen and inside a frame which, in some cases, may also contain the screen itself. The pushbutton panel may include, for example, stop buttons, start buttons and/or safety buttons.

In the prior art, control desks also have accessories, in particular, data entry devices such as keyboard and mouse.

Accessories such as keyboard and mouse are typically positioned on a support, which is also positioned under the screen.

Although present-day control units, or industrial PCs, are characterized by good dust and dirt resistance and seal (consider the shavings produced by the machine tool during machine processes), the control unit can be further protected by integrating it, for example, in the frame containing the screen and/or the pushbutton panel, or it may be placed in a purpose built container which may be located in proximity to the screen (for example, behind the screen) or elsewhere on the control desk.

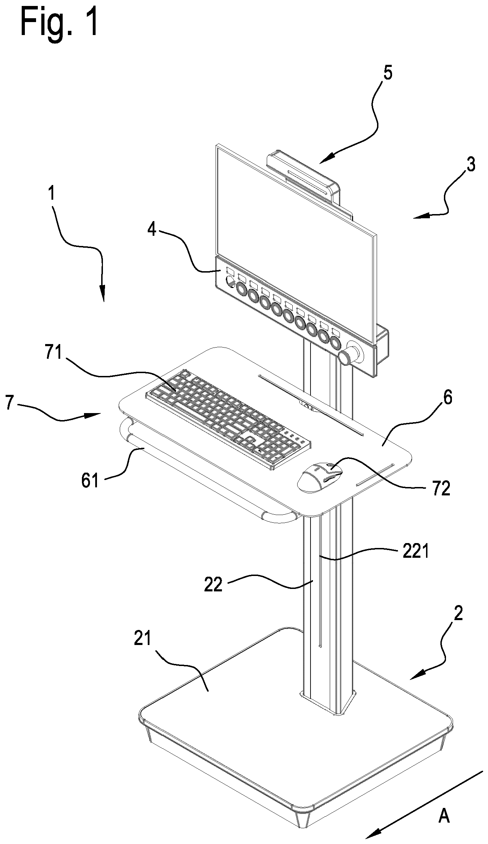

Figure 1 of patent application EP3900901 shows a control desk according to the prior art, which comprises a screen, a pushbutton panel and an industrial PC, contained in a frame. Figure 1 also shows a support disposed under the screen and configured to support a keyboard and a mouse.

It is evident that access to the control unit, for example when performing assembling/disassembling, maintenance or modifications on the machine tool, depends to a large extent on where the control unit itself is mounted, on whether it is inside a container (or a frame) and on how easy it is to access the container. If access is difficult, operations for assembling/disassembling, maintenance or modification of the control unit may be particularly onerous and awkward for the operator.

Additionally, it is advantageous to integrate the control unit in the control desk so it fits in unobtrusively in the overall aesthetic design of the control desk.

Furthermore, it is advantageous to integrate the control unit in the control desk in such a way as to ensure good ergonomics, since the control desk is the position from where the operator has to work. In effect, owing to the overall size of the container for the control unit, the control desk may be excessively large and cumbersome, hence difficult to move, or unergonomic and awkward for the operator to use.

This invention has for an aim to provide a control desk for a machine tool to overcome the above mentioned disadvantages of the prior art.

In particular, the aim of this invention is to provide a compact and ergonomic control desk for a machine tool.

A further aim of this invention is to propose a control desk for a machine tool, where access to the control unit is easy and ergonomic.

This aim is fully achieved by the control desk for a machine tool of this disclosure as characterized in the appended claims.

This disclosure provides a control desk for a machine tool.

In particular, according to the invention, the control desk may comprise a main frame. The main frame may be a standalone structure, so that the control desk may be a distinct part, separate from the machine tool. For example, the main frame may be mounted on wheels so that the control desk is movable and transportable by an operator into an area close to the machine tool. The electrical and data connection between the control desk and the machine tool may be made, for example, by a system of cables gathered together and protected inside a cable guide (for example, a hose made typically of plastic).

In an example, the main frame may be a structure connected to the machine tool such as, for example, an articulated arm, with one or more degrees of freedom. Thus, the control desk can be moved and adjustably positioned by the operator.

In an example, the main frame may be a part of the machine tool, such as, for example, the electric panel or other element having, for example, a vertical wall to which other components forming part of the control desk can be fitted, fixedly or movably.

In particular, according to the invention, the control desk may comprise a screen coupled to the main frame. For example, the screen may or may not be a touchless or non-touchless screen. The coupling between the main frame and the screen has some degrees of freedom so that the screen can be adjustably positioned to improve the ergonomics of the control desk. More particularly, according to the invention, the control desk may comprise a support coupled to the main frame and configured to support an accessory. The support may be coupled to the main frame, for example slidably, so as to be able, for example, to adjust its height from the floor or its distance from the screen, thus improving the ergonomics and usability of the control desk. The accessory may be, for example, a keyboard and/or a mouse. The control desk may also comprise further supports to be able to support further accessories such as, for example, label printers, bar code readers and/or holders for remote controls for the machine tool. The further supports may be coupled to the main frame or to the support, fixedly or movably, i.e. with some degrees of freedom, so that their position can be varied and the control desk made more ergonomic. Additionally, the further supports can be coupled removably to the main frame or to the support so they can be fitted or removed as required, i.e. depending on whether the further accessories are present or not.

More particularly, according to the invention, the control desk may comprise a container coupled to the main frame and configured to contain an electronic device. The electronic device may be, for example, the control unit, that is, an industrial PC. In an example, the control unit may be connected to the machine tool, for example, directly or through other electronic and electromechanical devices (for example, CNCs, I/O cards, sensors) to control the machine tool. Furthermore, the control unit may be connected, for example, to the screen so as to be able to display information relating, for example, to the machine tool, to a work program and/or to the progress of the current machining process. Furthermore, the control unit may be connected, for example, to the accessories, in particular to the keyboard and the mouse, so as to be able to receive input such as, for example, commands and data, from the operator.

In particular, the container may comprise a secondary frame coupled to the main frame. The secondary frame may be coupled to the main frame, for example slidably, so as to be able, for example, to adjust its height from the floor or its distance from the screen, thus improving the ergonomics and usability of the control desk.

Furthermore, the container may comprise a box which is configured to contain the electronic device and is coupled, for example slidably and/or rotatably, to the secondary frame. The box may thus be movable, for example, between an operating position, where the control desk can be used by the operator, for example to program or control the machine tool, and a non-operating position, where the operator can access the electronic device, in particular the control unit, and more particularly, the industrial PC, housed in the box, so as to be able to carry out operations for assembly, maintenance or modification of the electronic device itself.

Furthermore, also according to the invention, the box may comprise an external surface, where the external surface has an opening giving access to an internal space inside the box.

Additionally, according to the invention, the external surface may comprise a main gasket disposed in proximity to a perimeter of the opening.

In particular, the container may comprise a cover, configured to be coupled to the external surface so as to close the opening of the external surface. More particularly, the cover may comprise a secondary gasket disposed to at least partly overlap the main gasket when the cover is coupled to the external surface to close the opening of the external surface.

In an example, the support may be configured to be coupled to the external surface so as to close the opening of the external surface. In this case, the support acts as a cover, thus reducing the number of parts making up the control desk, thereby simplifying the control desk and reducing its cost. Additionally, when accessing the control unit, the operator would no longer need to remove the cover from the external surface, i.e. separating the box from the support, the opening would already be open and the internal space in the box readily accessible, thus reducing and simplifying the operations the operator needs to do to gain access to the control unit.

Furthermore, the support may comprise a secondary gasket disposed to at least partly overlap the main gasket when the support is coupled to the external surface to close the opening.

Additionally, when the box is at the operating position, the opening may be parallel to the support, whereas, when the box is at the non-operating position, the opening may be inclined to the support, in particular, perpendicular to the support.

In an example, the box may be coupled slidably to the secondary frame along a given direction so as to be movable between a locked position, where the box cannot rotate relative to the secondary frame, and an unlocked position, where the box can rotate relative to the secondary frame. The locked position may coincide, for example, with the operating position, while the unlocked position may coincide, for example, with an intermediate position between the operating position and the non-operating position.

In particular, the box may have a main contact surface and the secondary frame may have a secondary contact surface. At the locked position, the main contact surface and the secondary contact surface may be in contact and thus make a shape coupling preventing the box from rotating relative to the secondary frame, whereas, at the unlocked position, the main contact surface and the secondary contact surface may not be in contact and thus do not make the shape coupling, hence allowing the box to rotate relative to the secondary frame.

In an example, the box may comprise a slot. The secondary frame may comprise a protrusion which extends along a given direction and may be configured to be positioned at least partly in the slot. The slot may be free to slide on the protrusion along the given direction and to rotate on the protrusion about an axis perpendicular to that direction.

Furthermore, the protrusion may have a first portion, on which the slot is free to slide along the given direction, and a second portion, which may be perpendicular to the first portion and may be configured to limit the sliding of the slot along the given direction.

In an example, the secondary frame may be coupled to the support so it can be coupled to the main frame via the support. That way, the control desk is made particularly compact and the container well hidden from the operator's view so as to improve the aesthetics and ergonomics of the control desk.

This and other features will become more apparent from the following description of a preferred embodiment, illustrated purely by way of non-limiting example in the accompanying drawings, in which:
- Figure 1 shows a perspective view of a control desk for a machine tool according to the invention;
- Figures 2a, 2b, 2c and 2d illustrate the sequence of movements of a part of the control desk for a machine tool according to the invention; and
- Figure 3 shows a cross-sectional perspective view of the part of the control desk for a machine tool according to the invention.

Hereinafter in this disclosure, directional terms such as "right", "left", "front", "rear", "top", "bottom", "upper", "lower", "lateral" etc. are used with reference to the accompanying drawings. Since components and/or elements and/or embodiments of this invention may be positioned and/or operated in several different orientations, the directional terms are used solely by way of non-limiting example.

Figure 1 shows a control desk 1 for a machine tool, in particular a machine for machining wood or comparable materials.

The control desk 1 may comprise a main frame 2. In particular, the main frame 2 may be a standalone structure, a structure coupled to the machine tool, such as, for example, a mechanical arm having 0 or more degrees of freedom, or a part of the machine tool itself, such as, for example, a wall of an electric panel.

The main frame 2 may comprise a base 21. The base 21 may comprise one or more wheels, in particular 2 wheels, and more particularly, 4 wheels, so as to allow the control desk 1 to be moved easily into an area close to the machine tool. Furthermore, the base 21 may comprise a weight, for example, a block of cement or metal, to improve the stability of the control desk 1.

Again with reference to Figure 1, the main frame may comprise an upright 22 coupled to the base 21. The upright 22 may, for example, be hollow, that is, provided with a cavity which extends longitudinally for all, or at least part, of its length. The upright 22 may, for example, comprise a groove 221. The groove 221 may extend, for example, along the upright 22, that is, along the longitudinal axis of the upright 22. The groove 221 may extend for all, or at least part, of the length of the upright 22. The groove 221 may be an opening along an external surface of the upright 22, so that a space in the cavity of the upright 22 can be accessed through the groove 221. That way, the upright may be used to gather together, contain and/or hide cables or other wire-shaped elements.

Figure 1 also shows a screen 3 which is coupled to the main frame 2, in particular to the upright 22. The coupling may have several degrees of freedom, so that the screen 3 can, for example, be made to slide relative to the upright 22 or rotated about one or more axes. That way, the position and orientation of the screen relative to the main frame 2 can be adjusted to make the control desk more ergonomic.

The control desk 1 may comprise a pushbutton panel 4, i.e. a plurality of pushbuttons disposed, for example, in a row under the screen. The pushbutton panel and the screen 3 may be enclosed within the same frame. Furthermore, the control desk 1 may comprise a state indicator 5. The state indicator 5 may provide an operator with information regarding, for example, the state of the machine tool. Indication may be in form of light signals, acoustic signals, vibrations and/or aptic effects.

Figure 1 also shows a support 6 which is coupled to the main frame 2, in particular to the upright 22. For example, the coupling may be fixed or it may have several degrees of freedom, so that the support 6 can, for example, be made to slide relative to the upright 22 or rotated about one or more axes. That way, the position and orientation of the support 6 relative to the main frame 2 can be adjusted to make the control desk 1 more ergonomic. The support 6 may comprise a handlebar 61 to make it easier to move the control desk 1 when necessary.

The support 6 is configured to support, for example, at least one accessory 7. Figure 1 shows, as examples of accessories 7, a keyboard 71 and a mouse 72. Using the groove 221, any cables of the accessories 7, in particular of the keyboard 71 and mouse 72, any cables of the screen 3, any cables of the pushbutton panel 4, and/or any cables of the state indicator 5 may be gathered together, contained, guided and/or hidden, for example, inside the upright 22.

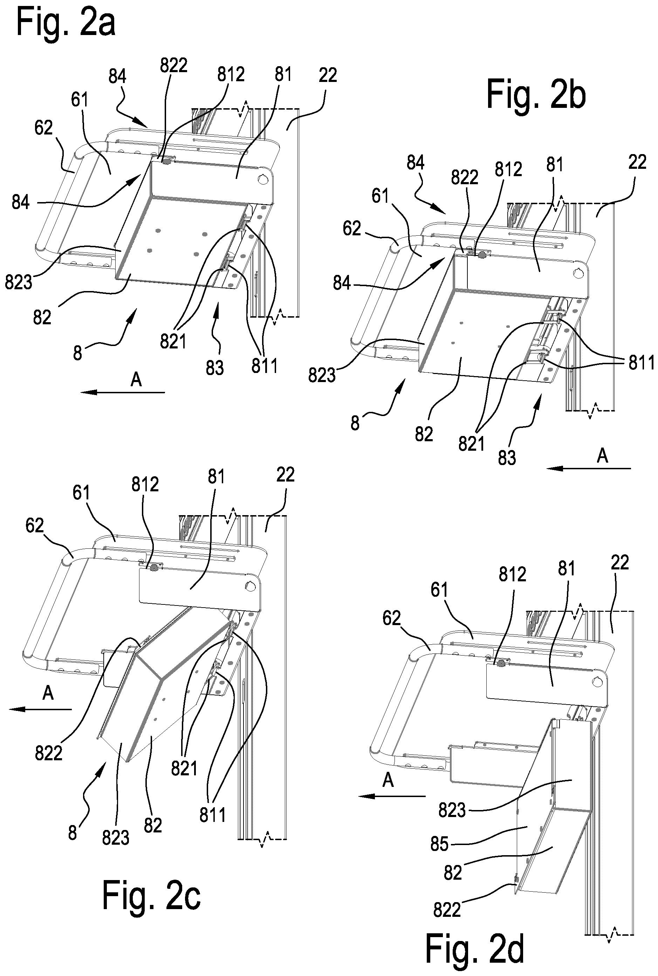

The control desk 1 may comprise a container 8, which may be configured to contain an electronic device, in particular a control unit, in particular an industrial PC, as shown, for example in Figures 2a, 2b, 2c and 2d. The container 8 may be coupled to the main frame 2, in particular to the upright 22. The coupling may have several degrees of freedom, so that the container 8 can, for example, be made to slide relative to the upright 22 or rotated about one or more axes. That way, the position and orientation of the container 8 relative to the main frame 2 can be adjusted to make the control desk 1 more compact and more ergonomic. Furthermore, the container 8 may be coupled directly to the main frame 2, in particular to the upright 22, or indirectly, through the support 6, for example. In this example, the control desk 1 is particularly compact and ergonomic. For example, the container 8 may be coupled to the main frame 2 so as to be movable between an operating position and a non-operating position. At the operating position, the control desk 1 is particularly compact and ergonomic, the control unit is not easily accessible, hence is protected from dust and shavings, and the operator can control the machine tool. At the non-operating position, the control desk 1 is less compact and ergonomic, the control unit is easy to access, hence an operator can, in simple steps, carry out operations for assembling, disassembling, maintenance and modification on the control unit.

To be movable between the operating position and the non-operating position, the container 8 may be coupled to the main frame 2, for example slidably and/or rotatably.

The container 8 may comprise a secondary frame 81 and be coupled to the main frame 2 through the selfsame secondary frame 81. The secondary frame 81 may be coupled directly to the main frame 2 or, as shown by way of example in Figures 2a, 2b, 2c and 2d, it may be coupled directly to the support 6, hence indirectly to the main frame 2. As also shown in those drawings, the secondary frame 81 may be substantially in the shape of a C. The container 8 may comprise a box 82 which is configured to contain the electronic device (for example, the control unit) and which is coupled, for example slidably and/or rotatably, to the secondary frame 81.

The box 82 may have an external surface 823 and an internal space enclosed in, that is, defined by, the external surface 823. The internal space is configured to contain the logic control unit, for example. The external surface 823 may have an opening providing access to the internal space inside the box 82. In the example shown in Figures 2a, 2b, 2c and 2d, the box 82 may have the shape of a parallelepiped and the external surface 823 may comprise a first base face of the parallelepiped and four lateral faces. In the example, the opening in the external surface 823, i.e. the opening in the box 82, may be on the second base face so as to give an operator easy access to the internal space of the box 82.

As shown, for example, in Figure 2d, the control desk 1 may comprise a cover 85, configured to be coupled removably to the external surface 823, for example by means of screws. The purpose of the cover 85 is to close the opening, so that dust and shavings produced during machining by the machine tool cannot enter the internal space of the box 82, thus safeguarding the safety and functioning of the electronic device contained therein.

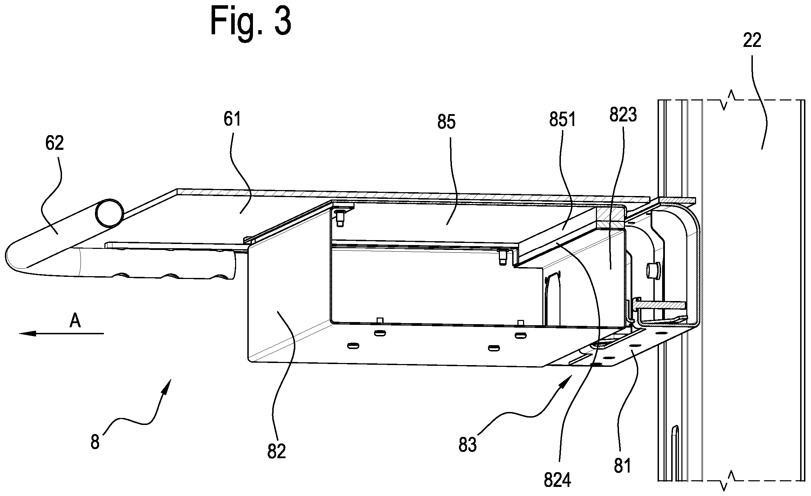

To improve the dust and dirt seal of the removable coupling between box 82 and cover 85 (i.e., between external surface 823 and cover 85), as a whole, a perimeter of the opening may be provided with a main gasket 824. As shown purely by way of an example in Figure 3, the cover 85 may comprise a secondary gasket 851 which overlaps the main gasket 824, at least along a portion of it, in particular the portion, or side, of the box 82 which faces the main frame 2, more particularly, the upright 22. Any connecting cables between the electronic device located inside the box 82 and, for example, the screen 4, the state indicator 5, the accessories 7 or the machine tool, can go through the external surface 823, that is, they can come out of the internal space of the box 82, passing between the main gasket 824 and the secondary gasket 851, so that these tightly hold the connecting cables but prevent dust and dirt from getting inside the box 82. In another example, the support 6 may be configured so it can be used as a cover for the opening of the box 82, that is to say, it may be coupled removably to the external surface 823, using screws, for example, so as to close the opening of the box 82. In this case, the support 6 comprises the secondary gasket 851.

The coupling between the box 82 and the secondary frame 81 may be a movable coupling, for example, a slidable and/or rotatable coupling.

The coupling between the box 82 and the secondary frame 81 may be made as shown purely by way of an example in Figures 2a, 2b, 2c and 2d. The box may comprise a slot 821, in particular, two slots 821, while the secondary frame may comprise a protrusion 811, in particular two protrusions 811. The protrusions 811 may extend along a direction A and may each be configured to be positioned, at least partly, inside one of the slots 821. The two slots 821 may be free to slide on the protrusions 811 along the direction A and to rotate on the protrusions 811 about an axis perpendicular to the direction A, as shown, for example, in the sequence represented in Figures 2a, 2b, 2c and 2d.

The protrusions 811 may have a first portion and a second portion which may be, for example, perpendicular to the first portion or bent towards the support 6. The first portion may be configured so that the slot can be free to slide on the first portion itself, along the direction A. The second portion of each protrusion 811 may be configured so it can be positioned in a respective slot 821, so as to limit the sliding of the slot 821 along the direction A. A safety screw may be coupled, for example removably, to a protrusion or to each protrusion 811 so as to prevent one of the slots 821, or each of the slots 821 from coming away from the respective protrusion 811.

In the example described here, the box 82 may slide along a direction A relative to the secondary frame 81 and may rotate about an axis perpendicular to the direction A.

Again with reference to Figures 2a, 2b, 2c and 2d, the box may have a main contact surface 822 and the secondary frame 81 may have a secondary contact surface 812. The box 82 may be at a locked position, where the main contact surface 822 and the secondary contact surface 812 may be in contact so as to make a shape coupling preventing the box 82 from rotating relative to the secondary frame 81. Additionally, the box 82 may be at an unlocked position, where the main contact surface 822 and the secondary contact surface 812 may not be in contact so as not to make a shape coupling and to allow the box 82 to rotate relative to the secondary frame 81.

With reference to the example shown in Figure 2a, the box 82 may be at the operating position, which may coincide with the locked position. The main contact surface 822 and the secondary contact surface 812 may be in contact so as to make a shape coupling preventing the box 82 from rotating relative to the secondary frame 81. The opening in the external surface 823 may be closed by the cover 85 (not shown in Figure 2a). In the example where the support 6 is substantially planar, i.e., where a plane which the support 6 lies in can be identified, and where the opening is also planar, i.e. where a plane which the opening lies in can be identified, the opening may be parallel to the support 6. With a fastening element, for example a screw or the like, the box 82 may be blocked at the locked position (hence at the operating position) so as to prevent unwanted sliding of the box 82 along the direction A. In this example, the container 8 is at an unobtrusive, compact position, under and in proximity to the support 6.

In the example shown in Figure 2b, the fastening element has been removed. The box 82 can therefore slide along the direction A from the locked position to the unlocked position, shown in Figure 2b. In particular, the slots 821 may slide on the first portion of the protrusions 811 until coming into contact with the second portion of the protrusions 811, which limit the sliding of the selfsame slots 821 along the direction A. When the box 82 slides along the direction A, the box 82 cannot rotate, so there is no risk of unwanted rotation creating a dangerous situation for the operator. Additionally, during the sliding movement, the main contact surface 822 and the secondary contact surface 812 act as a linear guide, assisting the operator in sliding the box 82. After sliding the box along the direction A, the main contact surface 822 and the secondary contact surface 812 may no longer be in contact so as to not make a shape coupling and thus allowing the box 82 to rotate relative to the secondary frame 81.

With reference to the example shown in Figure 2c, the box 82 may rotate about an axis perpendicular to the direction A, for example, thanks to the coupling between slots 821 and protrusions 811.

With reference to the example shown in Figure 2d the box 82 may rotate up to the non-operating position. In the example where the support 6 is substantially planar, i.e., where a plane which the support 6 lies in can be identified, and where the opening is also planar, i.e. where a plane which the opening lies in can be identified, the opening may be inclined to the support 6, preferably perpendicular to the support 6, that is, parallel to the longitudinal axis of the upright 22. In this example, the container 8, in particular the box 82, is at a clearly visible and not very compact position, making it easy to remove the cover 85, if any, and to gain access to the internal space of the box 82, so as to allow the operator to easily perform activities such as, for example, assembling and disassembling, modification and/or maintenance on any electronic device (for example, the control unit) positioned inside the container 8, in particular inside the box 82.

This invention has been described by way of non-limiting illustration with regard to its preferred embodiments but it is understood that variants and/or modifications can be made by experts in the trade without thereby departing from the scope of protection afforded by the claims appended hereto.

## Claims

1. A control desk (1) for a machine tool, comprising:
- a main frame (2);
- a screen (3) coupled to the main frame (2);
- a support (6) coupled to the main frame (2) and configured to support an accessory (7); and
- a container (8), coupled to the main frame (2) so as to be movable between an operating position and a non-operating position, and configured to contain an electronic device.

2. The control desk (1) according to claim 1, wherein the container (8) comprises:
- a secondary frame (81) coupled to the main frame (2); and
- a box (82) configured to contain the electronic device and coupled movably to the secondary frame (81) so that the container (8) is movable between the operating position and the non-operating position.

3. The control desk (1) according to claim 2, wherein the box (82) comprises an external surface (823) and an internal space defined by the external surface (823), and wherein the external surface (823) has an opening giving access to the internal space.

4. The control desk (1) according to claim 3, wherein the external surface (823) comprises a main gasket (824) disposed in proximity to a perimeter of the opening.

5. The control desk (1) according to claim 3 or 4, wherein the container (8) comprises a cover (85) configured to be coupled to the external surface (823) to close the opening.

6. The control desk (1) according to claim 5, wherein the cover (85) comprises a secondary gasket (851) disposed to at least partly overlap the main gasket (824) when the cover (85) is coupled to the external surface (823) to close the opening.

7. The control desk (1) according to claim 3 or 4, wherein the support (6) is configured to be coupled to the external surface (823) to close the opening.

8. The control desk (1) according to claim 7, wherein the support (6) comprises a secondary gasket (851) disposed to at least partly overlap the main gasket (824) when the support (6) is coupled to the external surface (823) to close the opening.

9. The control desk (1) according to any one of claims 2 to 8, wherein the box (82) is coupled rotatably to the secondary frame (81) so that the container (8) is movable between the operating position and the non-operating position.

10. The control desk (1) according to claim 9, wherein when the box (82) is at the operating position, the opening is parallel to the support (6), and wherein when the box (82) is at the non-operating position, the opening is inclined relative to the support (6).

11. The control desk (1) according to any one of claims 2 to 10, wherein the box (82) is coupled slidably to the secondary frame (81) along a direction (A) so as to be movable between a locked position, where the box (82) cannot rotate relative to the secondary frame (81), and an unlocked position, where the box (82) can rotate relative to the secondary frame (81).

12. The control desk (1) according to claim 11, wherein the box (82) has a main contact surface (822) and the secondary frame (81) has a secondary contact surface (812), wherein at the locked position, the main contact surface (822) and the secondary contact surface (812) are in contact and thus make a shape coupling preventing the box (82) from rotating relative to the secondary frame (81), and wherein at the unlocked position, the main contact surface (822) and the secondary contact surface (812) are not in contact and thus do not make the shape coupling, hence allowing the box (82) to rotate relative to the secondary frame (81).

13. The control desk (1) according to any one of claims 2 to 12, wherein the box (82) comprises a slot (821), wherein the secondary frame (81) comprises a protrusion (811) which extends along a direction (A) and is configured to be positioned at least partly in the slot (821), wherein the slot (821) is free to slide on the protrusion (811) along the direction (A) and to rotate on the protrusion (811) about an axis perpendicular to the direction (A).

14. The control desk (1) according to claim 13, wherein the protrusion (811) has a first portion, on which the slot (821) is free to slide along the direction (A), and a second portion, perpendicular to the first portion and configured to limit the sliding of the slot (821) along the direction (A).

15. The control desk (1) according to any one of the preceding claims, wherein the secondary frame (81) is coupled to the support (6) so as to be coupled to the main frame (2) via the support (6).
